# EUROPEAN PATENT SPECIFICATION

(11) **EP 1 090 545 B1**
(45) Date of publication and mention of the grant of the patent: **16.06.2004**
(21) Application number: 00121798.3
(22) Date of filing: 05.10.2000
(51) Int. Cl.: A01G 9/24

(54) **Greenhouse comprising a reservoir for storing liquid, such as rain water**
Gewächshaus mit einem Behälter zur Lagerung von Flussigkeit, wie Regenwasser
Serre pourvue d'un réservoir de stockage de liquide, tel que de l'eau de pluie

(30) Priority: 06.10.1999 NL 1013223; 21.07.2000 NL 1015770
(43) Date of publication of application: 11.04.2001
(73) Proprietor: Waterblock B.V., 4879 NE ETTEN-LEUR (NL)
(72) Inventor: Van Ham, Jacobus Hendrikus Maria, 4721 AB SCHIJF (NL)
(74) Representative: Dohmen, Johannes Maria Gerardus

(56) References cited:
- GB-A- 2 314 367
- DATABASE WPI Section PQ, Week 199716 Derwent Publications Ltd., London, GB; Class P13, AN 1997-165908 XP002147613 & CN 1 091 893 A (ZHAO B), 14 September 1994 (1994-09-14)
- PATENT ABSTRACTS OF JAPAN vol. 1999, no. 01, 29 January 1999 (1999-01-29) & JP 10 262479 A (MATSUOKA NORIHISA), 6 October 1998 (1998-10-06)

## Description

The invention relates to a greenhouse for cultivating plants, flowers, fruits and/or vegetables, comprising a floor and a reservoir for storing a liquid, such as rain water.

In glasshouse cultivation various systems are used for collecting rain water and condensed water and sprinkling water or irrigation water for use or reuse. In accordance with current legislation on the field of glasshouse cultivation, market gardeners or growers must be capable of storing 1000 m³ of rain water for every hectare of greenhouse land, to which end storage reservoirs or storage tanks are used in practice.

Expectations are that in or around 2001 the quantity of rain water to be stored will be increased to 2000 m³ per hectare for new greenhouses. For existing greenhouses a storage capacity of at least 500 m³ for each hectare of land will be required in or around 2001.

In flower and vegetable cultivation there is already a demand for a storage capacity of 2000 to 3000 m³ of rain water per hectare of greenhouse area, and in arboriculture this demand is at present 1500 to 2000 m³ per hectare of greenhouse area.

It is easy to calculate that the provisions of a storage capacity of 2000 to 3000 m³ of rain water in the form of storage reservoirs with the associated embankments and/or storage tanks will take up a land area of 10 to 15% per hectare of greenhouse area, which is uneconomic.

In addition to this economic drawback, storage reservoirs suffer from contamination by leaves, excrements from birds and the like, weed growth on the embankments and the necessary removal thereof by means of herbicides, algal growth, which forms a breeding ground for the moss fly larvae, and evaporation of water. Both in the case of storage reservoirs and in the case of storage tanks there is the additional risk of frost damage, damage to tank covers or to sealing foil and destruction of the landscape. A temperature increase of the storage water constitutes an additional risk of disease, such as the well-known Legionnaire's disease.

It will be apparent that the costs involved in keeping the storage reservoirs and/or storage tanks in optimum condition are considerable.

Generally the quality of rain water is more suitable for glasshouse cultivation than spring water or drinking water and surface water. What is more, the cost involved in tapping ground water by means of depth pumps becomes higher every year, whilst the requirements for obtaining a permit to do so are becoming stricter and stricter. Furthermore, ground water is often too cold and needs to be heated. In addition to that, the iron and bicarbonate content of ground water is (too) high, which is undesirable for glasshouse cultivation. Because of all the above reasons it can be very advantageous from an economic point of view to catch and store as much as possible rain water, whereby the costs of storage reservoirs and the annual maintenance thereof must be as low as possible.

Consequently it is an object of the invention to provide a greenhouse of the type referred to in the introduction which comprises an improved storage facility for rain water and for condensed water, sprinkling water and irrigation water that is collected in the greenhouse.

According to the invention this objective is accomplished in that the reservoir is disposed at least partially under the floor of the greenhouse.

The aforesaid drawbacks, in particular the uneconomic use of land and the annual cost of maintenance due to contamination and damage to storage reservoirs and/or storage tanks, are overcome by this underground storage of rain water. As a result of the underground storage, the temperature of the storage water will furthermore remain at a desired and to a considerable degree constant level. Algal growth belongs to the past, of course, and the risk of clogging is reduced.

It is necessary to collect one hundred per cent of the rain water in order to obtain the so-called "environment hallmark". Collect one hundred per cent of the rain water that precipitates on the greenhouse is relatively easy when using the invention, because it will be understood that the amount of water to be stored can be increased by adapting the depth of the reservoir. In addition to the fact that a grower or market gardener or producer will thus be able to meet the water needs of his enterprise completely, the burden on the environment is reduced to a substantial degree, of course.

In an embodiment of the greenhouse according to the invention the reservoir is comprised of a material which is capable to a high degree of retaining liquid and which possesses sufficient load bearing capacity to support the floor of the greenhouse and the load that is exerted thereon during use. The reservoir to be constructed is preferably dimensioned to provide sufficient storage capacity to accommodate an average annual precipitation of 750 mm. If 90% is to be collected, this means that a capacity of 3000 m³ per hectare of greenhouse land is required.

In a fairly simple embodiment of the invention the reservoir is in the form of a trough comprising a liquid-tight bottom and liquid-tight walls, wherein the trough is preferably filled with one or several of the following filling materials: washed seashells, Agrex granules, shells of a plastic material, apertured plastic spheres, open-work plastic cassettes, stool-shaped or table-shaped supporting modules, ribbed drainage, pipes of a plastic material, such as PVC, stackable gutters, for example made of concrete, plastic or sheet steel. The filling material provides an even support for the greenhouse floor.

In a preferred embodiment of the invention the filling material consists of supporting modules which are comprised of an elongated body having a foot at one end and one or more arms extending substantially transversely to the body at another end.

The arms may for example be so arranged as to give supporting modules comprising four, three, two or one arm(s), respectively, a cross-shaped, T-shaped, L-shaped or I-shaped appearance when seen in top plan view.

By making the supporting modules linkable, a mesh-shaped or grid-shaped supporting structure can be provided for evenly supporting the greenhouse floor, such as a floor consisting of tile-work or concrete or the like. In particular a floor of a water-impermeable concrete, such as type B35 concrete, with a synthetic fibre reinforcement.

In order to provide sufficient stability, the supporting modules, that is, the body, the foot and the arms may be made of a hollow plastic material or other sheet material to be filled with concrete, for example, after the hollow supporting modules have been placed. Prior to said filling, one or more reinforcement bars can be placed in the linked-together supporting modules for reinforcing purposes.

In another embodiment of the greenhouse according to the invention the trough is excavated under the greenhouse floor and the walls and the bottom of the trough are lined with a water-impermeable, elastic rubber or plastic foil of sufficient mechanical strength. In order to prevent the foil being damaged by shells, for example, said foil preferably has a brush-like structure extending towards the inside of the trough.

In a preferred embodiment of the invention the walls and the bottom of the trough are lined with a water-impermeable concrete, such as type B35 concrete, with a synthetic fibre reinforcement.

In another embodiment of the greenhouse according to the invention, in order to collect sprinkling water or irrigation water and condensed water in the greenhouse, the filling material is covered with a water-permeable cover layer, such as a water-permeable cloth, on which a layer of for example drain sand or crushed gravel is present. All the water in the greenhouse and all rain water is collected in the liquid reservoir via said water-permeable cover layer. By having the reservoir extend for example 50 - 100 cm beyond the circumference of the greenhouse, also all water of condensation or vaporization on the outside of the greenhouse is collected in the reservoir again via infiltration, so that there will be no harmful effects for the environment.

The ground that becomes available upon excavation can be used advantageously for levelling up the greenhouse. That is, as an elevation layer on top of the liquid-permeable cover layer, wherein the elevation layer may be finished with tile-work, cloth or for example concrete, depending on the type of crop. Using the material that is present at the site in this manner prevents the reservoir from being pushed up by the ground water pressure when the reservoir is only partly filled. The elevation also makes it possible to provide adequate and effective protection against flooding of the greenhouse in case of extreme rainfall and the like. This makes it possible to use low-lying areas as well for glasshouse cultivation.

The reservoir can be compartmentalised, with a first compartment being arranged for storing water and a second compartment being arranged as an overflow basin. Such an overflow basin is provided under a liquid-tight floor of the greenhouse in order to prevent condensed water from the greenhouse or sprinkling water and/or irrigation water that has come into contact with the crop from finding its way into said overflow basin.

Expectations are that legislation will be tightened up also with regard to draining excess water from glasshouse cultivation into the surface water, because this excess water may contain traces of pesticides or fertilizers and the like.

According to yet another embodiment of the invention the greenhouse is to this end provided with a rain water drainage system comprising one or more rain water drain pipes, which open into a separating filter which is connected to the reservoir. The separating filter comprises connections both to the storage portion and to the overflow portion of the reservoir, or to an outlet to the surface water, which connections can be shut off. By using a construction of this kind, contamination of the overflow basin or the surface water by fertilizers or pesticides that are present in the storage reservoir is prevented.

Since the temperature of the storage water in the reservoir of the greenhouse according to the invention remains more or less constant, the so-called day tank that is generally used in the current greenhouses is no longer necessary. In this day tank the amount of water that is required for one day is brought to a desired temperature and mixed with fertilizers or other substances, if necessary.

In one advantageous embodiment, one or more compartments of the reservoir according to the invention can be thermally insulated. In the summer cold water, such as cold spring water, can be stored therein for cooling purposes, for example. In the winter heated water can be stored therein, for example.

In the greenhouse according to the invention a mixing/metering system may be disposed directly between a pump system connected to the reservoir and a sprinkling or irrigation system present in the greenhouse for the properly metered mixing of the liquid from the reservoir.

As a result, the entire water management system, including the piping, the pumps and the like, can be disposed inside the greenhouse of the invention. This leads to a considerable saving on equipment and piping in comparison with the situation wherein storage reservoirs and/or storage tanks are used, which may in many cases be disposed a relatively large distance away from a greenhouse when insufficient room is available in the immediate vicinity thereof.

In an embodiment of the invention, in order to meet the need for water in case of a lack of rain water, a supply pipe that opens into the reservoir is provided for storing liquid from an external source, such as spring water, surface water or drinking water, for example, in the reservoir. Arrangements have been made to prevent rain water or condensed water or sprinkling water of irrigation water from the greenhouse finding its way into said supply pipe, which may be divided into branches that open into outlets that are distributed over the reservoir.

In a preferred embodiment of the greenhouse according to the invention, in order to effect an optimum collection of rain water and avoid as much as possible the risk of condensed water landing outside the greenhouse, the greenhouse comprises straight or vertical walls on the outside, which are connected to rain water pipes extending into the reservoir via an inclined roof and a gutter system that is present inside the greenhouse.

In the case of a greenhouse supported by pillars, the supporting pillars can extend through the reservoir in a liquid-tight manner by means of a suitable foundation box or be supported in or on the reservoir.

The invention will be explained in more detail hereafter by means of a preferred embodiment.

Figure 1 is a schematic cross-sectional view of a typical greenhouse.

Figure 2 is a schematic top plan view of the greenhouse of Figure 1.

Figure 3 is a schematic top plan view of a greenhouse according to the invention.

Figure 4 is a schematic sectional view of the greenhouse according to the invention along line IV - IV in Figure 3.

Figure 5 is a schematic sectional view of a part of the reservoir of the greenhouse according to the invention.

Figure 6 schematically shows a lead-through for a pipe in the reservoir according to the invention.

Figure 7 is a very schematic view of a reservoir according to the invention and a pipe present therein for tapping a liquid or water by means of a pump system.

Figure 8 is a schematic sectional view along line VIII - VIII in Figure 7.

Figure 9 is a more detailed schematic view of the separating filter in the drainage system according to the invention.

Figure 10 is a detailed schematic view of an outlet at the end of a supply pipe according to the invention.

Figures 11a-i are schematic, perspective views of different filling materials to be used in the invention.

Figure 12 is a schematic longitudinal sectional view of a preferred embodiment of a supporting module to be used in the invention.

Figure 13 is a schematic top plan view of the supporting module as shown in Figure 12.

Figure 14 is a more detailed schematic view of a part of the longitudinal sectional view that is shown in Figure 12.

Figure 15 is a larger-scale, schematic sectional view of a detail of a connection of the supporting module as shown in Figure 12.

Figure 16 is a schematic top plan view of a supporting structure built up of supporting modules, such as the supporting module of Figure 12, in a reservoir as shown in Figure 5, for supporting a floor of a greenhouse present above said reservoir.

Figure 17 is a schematic top plan view of a cover to be used with the linked-together supporting modules according to Figure 16.

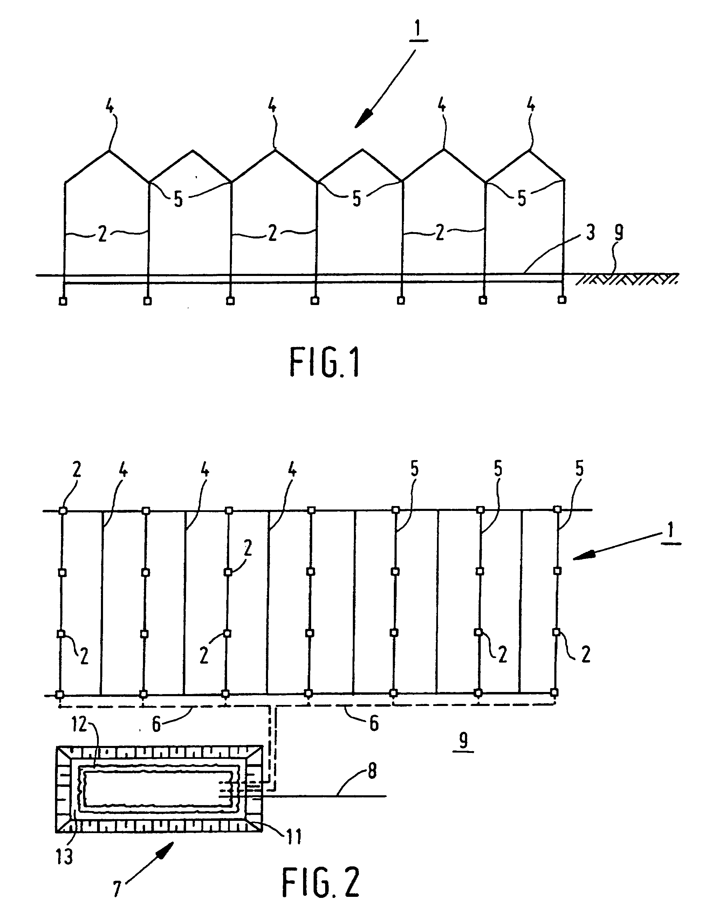

Figure 1 is a schematic cross-sectional view of a typical greenhouse 1 comprising supporting pillars 2, which are supported in the ground under the floor 3 of greenhouse 1. Numeral 4 indicates the ridge line of the greenhouse 1, whilst numeral 5 indicates the location of drain gutters or the gutter line for drainage of rain water that falls on greenhouse 1. As is known, the greenhouse is built up of glass as much as possible in order to effect maximum incidence of light.

Figure 2 is a schematic top plan view of the greenhouse 1 of Figure 1. Broken lines 6 indicate (one or more) drainpipes for rain water from the greenhouse 1 to a storage reservoir 7. From storage reservoir 7 a pipe 8 for tapping water from the storage reservoir 7 extends to a so-called day tank (not shown), in which the water is brought to the desired temperature and/or mixed with nutrients, fertilizers or other substances to be administered to the crop present in greenhouse 1.

Storage reservoir 7 is of the type that rises above the surface level 9, and it comprises an embankment 11. Present on embankment 11 and bottom 12 is a lining of a rubber or plastic foil 13. In case of a lack of room the storage reservoir can be located a relatively large distance away from the greenhouse, as a consequence of which a comprehensive and consequently expensive supply and drainage system for rain water is required.

As already mentioned in the introduction, a storage reservoir 7 of this kind has a large number of drawbacks, among which contamination by leaves, branches etc., bird excrements, weed growth on the embankments and the necessary removal thereof by means of environmentally unfriendly herbicides, and algal growth, which forms a breeding ground for the moss fly larvae, and evaporation of water. Both in the case of storage reservoir 7 and in the case of a storage tank there is a large risk of frost damage, damage to tank covers or to the foil on the embankment and destruction of the landscape. As a result of a temperature increase of the storage water, there is the additional risk of disease, such as the well-known Legionnaire's disease.

A storage reservoir 7 having a capacity of 2000 - 3000 m³ per hectare of floor area of greenhouse 1 will be fairly large, with the attendant drawbacks of land being used uneconomically and the landscape being affected.

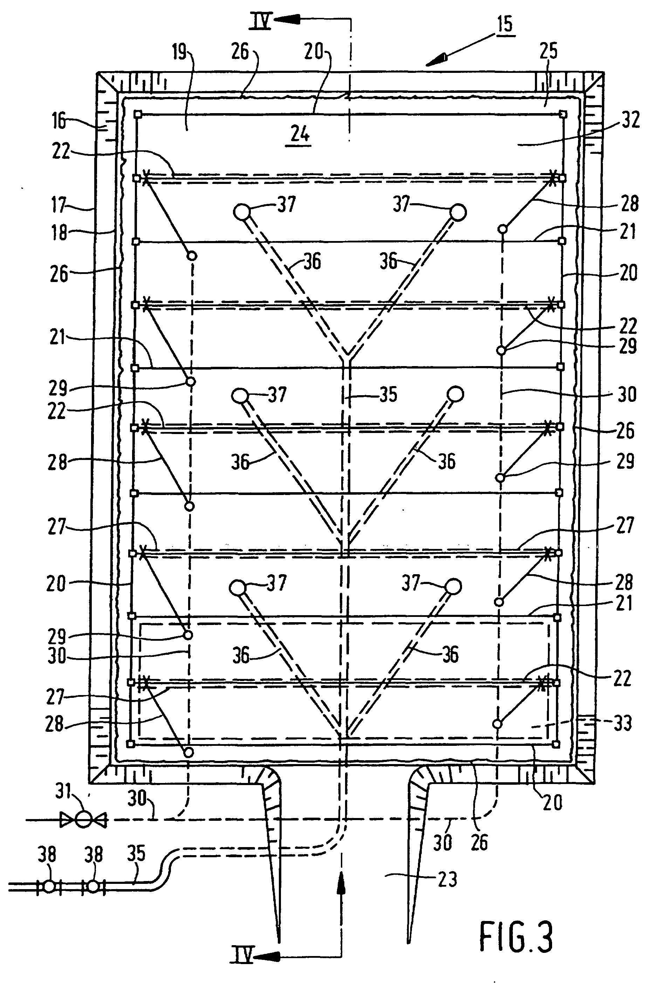

Figure 3 is a schematic top plan view of a greenhouse 15 according to the invention. Numerals 17, 18 indicate, respectively, the underside or foot of the embankment 16 and the upper side thereof, insofar as applicable. The greenhouse consists of a glass portion 19, with an outer wall 20, ridge lines 21 and gutter lines 22. The entrance to the greenhouse 15 is indicated by numeral 23.

In accordance with the invention, a reservoir 25 is present under the floor 24 covered by glass portion 19, which floor consists of tile-work, for example, or a water-impermeable concrete, preferably type B35 concrete, with a synthetic fibre reinforcement. In the illustrated preferred embodiment reservoir 25 moreover extends underground in outward direction, about 50 - 100 cm beyond the outer wall 20 of glass portion 19. This means that the reservoir comprises the so-called container area outside the greenhouse. The boundary line of the reservoir is indicated by numeral 26.

Connected to the gutters 27 for collecting rain water, which extend along gutter lines 22, are rain water drain pipes 28, which are distributed over the greenhouse 15, which drain pipes are preferably connected to reservoir 25 via separating filters 29. In order to prevent reservoir 25 from flooding, an overflow system for excess rain water is provided, which system comprises one or more overflow pipes 30 connected to separating filters 29 and one or more valves 31. The overflow system is capable of draining into the surface water, for example.

It is also possible, however, to compartmentalise reservoir 25, so that a first compartment 32 functions to store rain water therein and a second compartment (schematically indicated in broken lines) functions as an overflow reservoir 33. It will be understood that the overflow system will be connected to said overflow reservoir 33 in that case, with an additional connection to the surface water, if desired. It is possible to form more than two compartments, of course, wherein the actual storage reservoir 32 and also the overflow reservoir may consist of several (linked-together) compartments.

By thermally insulating one compartment it is possible to maintain water at a specific temperature therein, for example cold water in the summer for cooling purposes and hot water in the winter for heating purposes and the like.

A buried supply line 35 opening into reservoir 25 is provided for filling the reservoir in case of an extremely low amount of rainfall or of a strongly fluctuating amount of rainfall, which supply pipe is connected, via branches 36, to outlets 37 that are distributed over the greenhouse. Spring water, surface water or drinking water can be supplied via said supply pipe 35 in that case. Said supplying can take place in such a manner that the water is stored in reservoir 25 first, for example in order to be mixed with the water and fertilizers etcetera still present therein, and also in order to bring the water being supplied to a desired temperature for use, or to deliver the water being supplied directly to the crop, via a device (such as a small day tank or the like) for heating up the water, if necessary. One or more valves 38 are incorporated in the supply pipe for control purposes. In the case of drinking water being supplied, a double-seated valve 38 is provided.

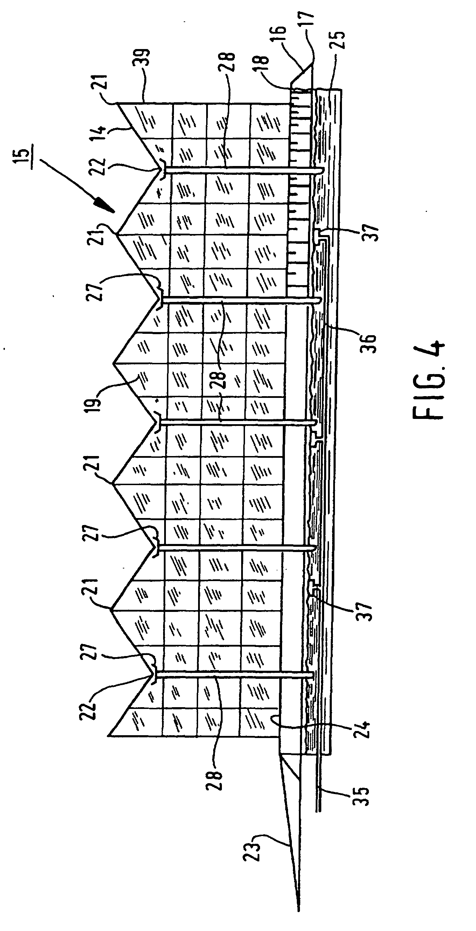

Figure 4 is a sectional view of the greenhouse 15 along line IV - IV in Figure 3. The figure clearly shows that glass portion 19 ends in a straight or vertical wall 39 at the outer circumference. Roof 14 slopes inwardly from the ridge line 21 of vertical wall 39 to join a gutter 27 for rain water drainage. This construction makes it possible to install and keep the entire water drainage system (gutters 27 and drainpipes 28) inside the greenhouse. Rain water or condensed water flowing down along wall 39 can flow directly into the part of the reservoir 25 that extends outside the circumference of the greenhouse or the glass portion. Said water will also land in the water storage system again, without any harmful effects for the environment. This makes it possible to comply with the applicable regulations in an efficient manner.

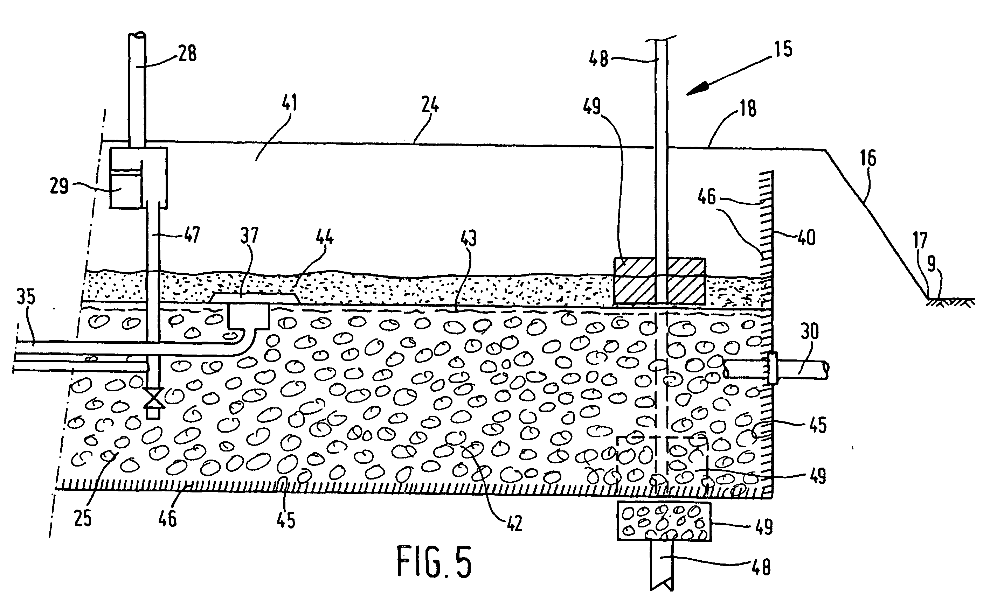

Figure 5 is a sectional view of part of the reservoir 25 of the greenhouse 15.

Reservoir 25 essentially consists of a trough 40, which is entirely or partially disposed in the ground under floor 24. The material 41 that is obtained upon excavation of trough 40 can be used advantageously to raise floor 24 and, depending on the specific crop, be provided with tile-work, cloth, concrete, etc. Raising the floor makes it possible to build greenhouses in low-lying areas, for example, with a reduced risk of flooding. Due to its weight, layer 41 also prevents the trough 40 or the reservoir from being driven up when no liquid or hardly any liquid is present therein.

Trough 40 is filled with a material 42 which possesses sufficient load bearing capacity for evenly supporting the floor 24 and the crop present thereon and for accommodating other forces being exerted on the floor by machines and the like being moved across the floor. Any filling material that possesses sufficient load-bearing capacity, such as washed seashells, Agrex granules, shells of a plastic material, apertured plastic spheres, open-work plastic cassettes, ribbed drainage, pipes of a plastic material, such as PVC, stackable gutters, for example made of concrete, plastic or sheet steel, is suitable as a filling material.

Washed seashells have a weight by volume of about 800 kg/m³. When loosely deposited seashells are used, it is possible to retain 750 litres of water per cubic metre of seashells. In more or less condensed condition of the seashells this amount slightly decreases to about 600 litres. For use in the invention it is preferable to provide the filling material in such a manner that a storage capacity of about 700 litres per cubic metre remains possible. When 90% of the rain water is to be collected, for example, a layer of at least 50 cm of shells per hectare of floor area of the greenhouse will be needed for storing 3000 m³ of water. Furthermore, variants with thicker layers of shells can be realised, for example in order to provide a transport road in the greenhouse that can be loaded more heavily, or at locations where a heavier floor load is to be expected.

For the possible alternative materials the following liquid storage capacity applies: Agrex granules about 400 l/m³, shells made of a plastic material about 800 l/m³, apertured plastic spheres about 850 l/m³, open-work plastic cassettes about 900 l/m³, ribbed drainage about 900 l/m³, PVC pipes about 800 l/m³, and stacked gutters made of concrete, plastic, sheet steel and the like about 700 l/m³.

As is shown in Figure 5, the filling material 42 is preferably covered with a water-permeable cover layer 43, such as a water-permeable cloth, with a layer 44 of about 10 cm of drain sand or crushed gravel or the like material present on top thereof.

The walls and the bottom of trough 40 are lined with a water-impermeable, elastic rubber or plastic foil 45 of sufficient mechanical strength, which foil 45 has a brushlike structure 46 extending towards the inside of the trough. In particular when shells are used as the filling material 42, the brushes function to prevent the foil from being damaged. When other filling materials are used it is not absolutely necessary to use the brush structure 46.

The left-hand part of Figure 5 schematically shows part of the rain water drainage system of the greenhouse 15. Drainpipe 28 opens into a separating filter 29, which is connected to trough 40 or reservoir 25 via a pipe 47.

The right-hand part of Figure 5 schematically shows a supporting pillar 48 of the glass portion 19, which supporting pillar is supported in a foundation box 49. The foundation box can be supported on the filling material 42, for example, but it may also extend in a liquid-tight manner through trough 40 on or in the ground under said trough, as is indicated in broken lines.

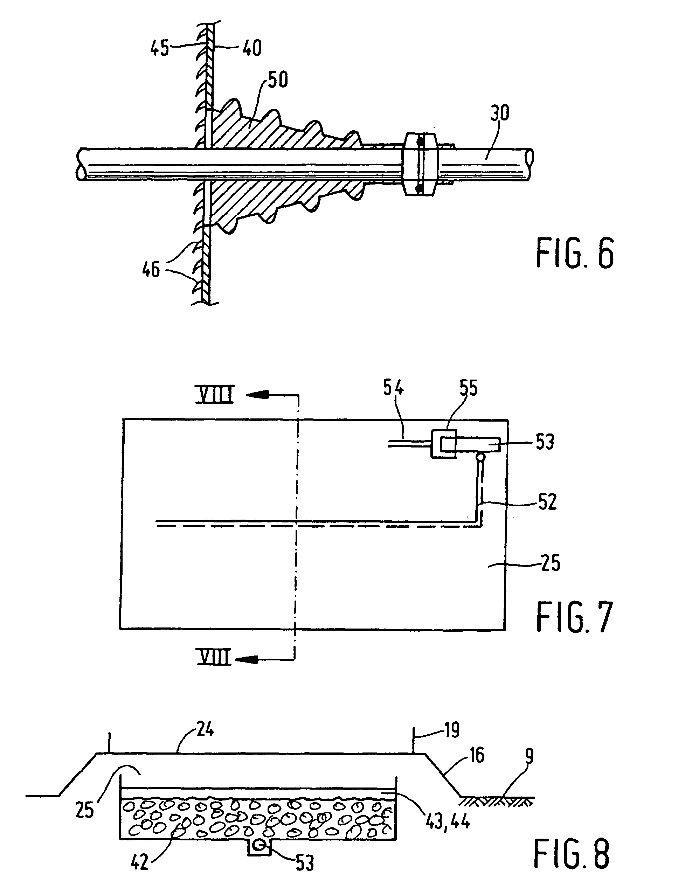

Overflow pipe 30 likewise penetrates trough 40 or foil 45 in a liquid-tight manner, for example by using a flexible gasket or lead-through 50 so as to be capable of withstanding movements caused by subsiding or driving up, as is schematically shown in Figure 6. Naturally, the same applies to supply pipe 35 to reservoir 25, which opens into outlets 37.

In a preferred embodiment of the invention the walls and the bottom of trough 40 are lined with a water-impermeable concrete 45, such as B35 type concrete, preferably with a synthetic fibre reinforcement.

Figure 7 very schematically shows a reservoir 25 according to the invention with a pipe 52 present therein for tapping liquid or water by means of pump system 53. Connected to the pump system 53 is a sprinkling or irrigation system 54, which is schematically represented by a pipe. Disposed between the pump system 53 and the sprinkling or irrigation system 54 is a mixing/metering device 55 for the metered mixing of the liquid from reservoir 25 with fertilizers or other substances, for example.

Figure 8 is a schematic, sectional view along line VIII - VIII in Figure 7. In this preferred embodiment, pipe 53 (or a number of pipes 53) is (are) disposed in a recessed, central portion of reservoir 25 or trough 40 for optimally tapping liquid from reservoir 25. Pipe 53 is perforated along its length, for example, and surrounded by filter material, such as a synthetic cloth, to prevent clogging and the like.

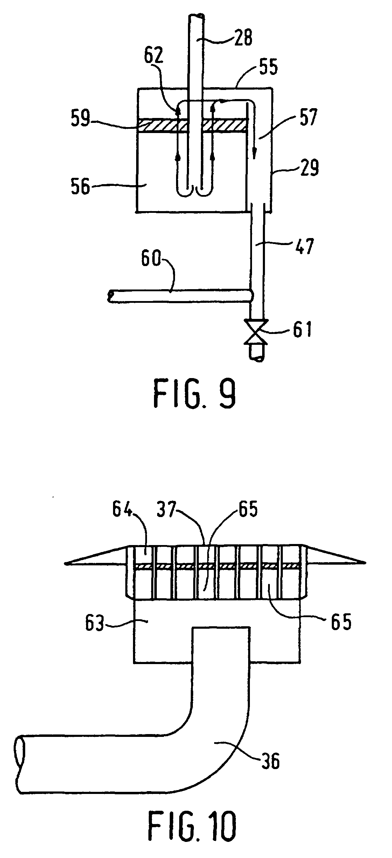

Figure 9 is a more detailed view of the separating filter 29 in the drainage system. Separating filter 29 is built up of a receptacle 56, which can preferably be closed by means of a removable cover 55, comprising an inlet opening 57 disposed under cover 55 and an outlet opening 58 for connection to the reservoir. Disposed under cover 55 in receptacle 56 is an exchangeable separating filter 59, through which at least one rain water drain pipe 28 extends, in such a manner that rain water 62 collected in receptacle 56 can only reach inlet opening 57 after filtration and be drained via the pipe 47 extending to the reservoir or the pipe 60 extending to the overflow reservoir. Preferably, a valve 61 is fitted in pipe 47 to the reservoir.

Figure 10 is a detailed schematic view of an outlet 37 present at the end of a supply pipe 35, 36. Outlet 37 is built up of a cover 64 closing the outlet opening 63, with outlet openings 65 disposed under outlet opening 63, seen from the floor, thus preventing the backflow of possibly contaminated water from the greenhouse or the crop into the supply system.

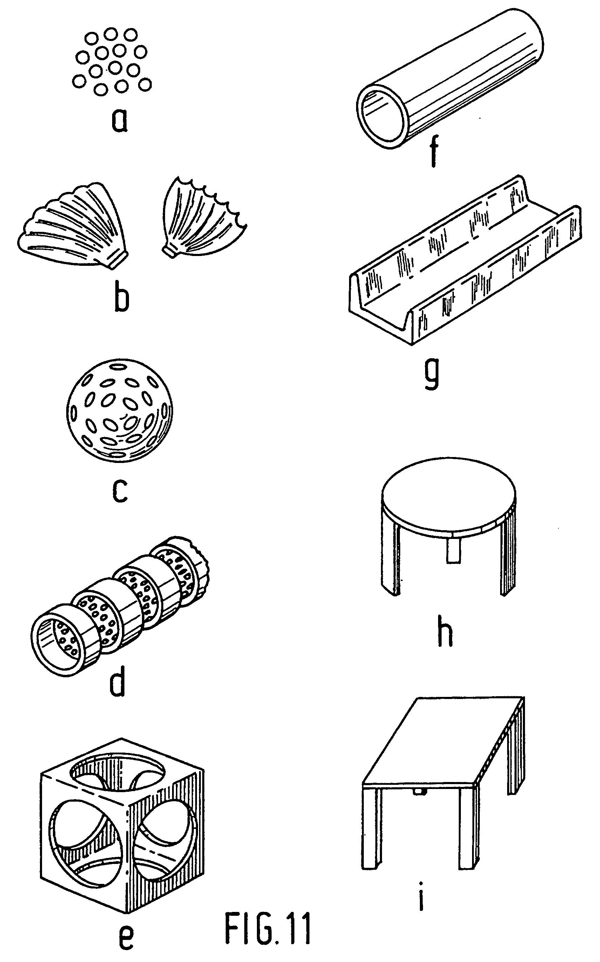

Figures 11a-g are schematic, perspective views, not to scale, of various filling materials such as, respectively, Agrex granules, shells (seashells or imitation shells of a plastic material), perforated plastic spheres, PVC ribbed drainage, open-work cassettes, PVC pipes and gutter material of concrete, plastic or sheet steel for providing an even supporting structure, which is built up in layers, if necessary, for the floor of a greenhouse disposed on top of a reservoir for water storage which is filled with said filling material. Figures 11h-i are schematic, perspective views, not to scale, of, respectively, a stool-shaped and a table-shaped supporting module to be used as the filling material in accordance with the invention. Also other suitable materials or structures can be used as the filling material, of course.

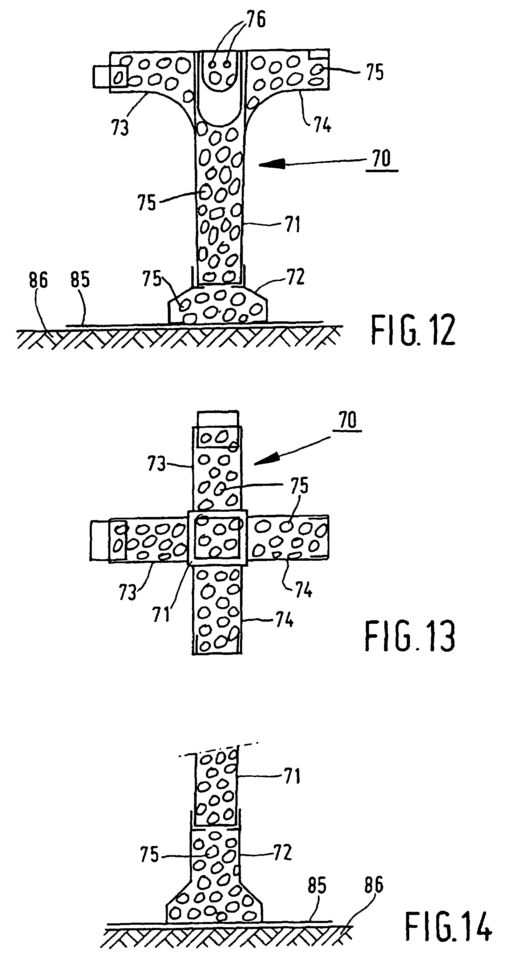

In a preferred embodiment of the invention the filling material consists of supporting modules of the type illustrated in Figures 12 - 17.

Figure 12 is a schematic longitudinal sectional view of a supporting module 70 consisting of an elongate body 71. One end of body 71 joins a foot 72, and one or more arms 73, 74 extending substantially transversely to the body 71 are present near the other end of body 71.

Figure 13 is a top plan view of supporting module 70, which clearly shows that said module has four arms extending at an angle of 90° to each other.

It is also possible to form three-armed, two-armed or one-armed supporting modules instead of four-armed supporting modules, of course. The three-armed supporting modules may be T-shaped, for example, the three-armed supporting modules may be L-shaped and the one-armed supporting module may be I-shaped (not shown), when seen in top plan view.

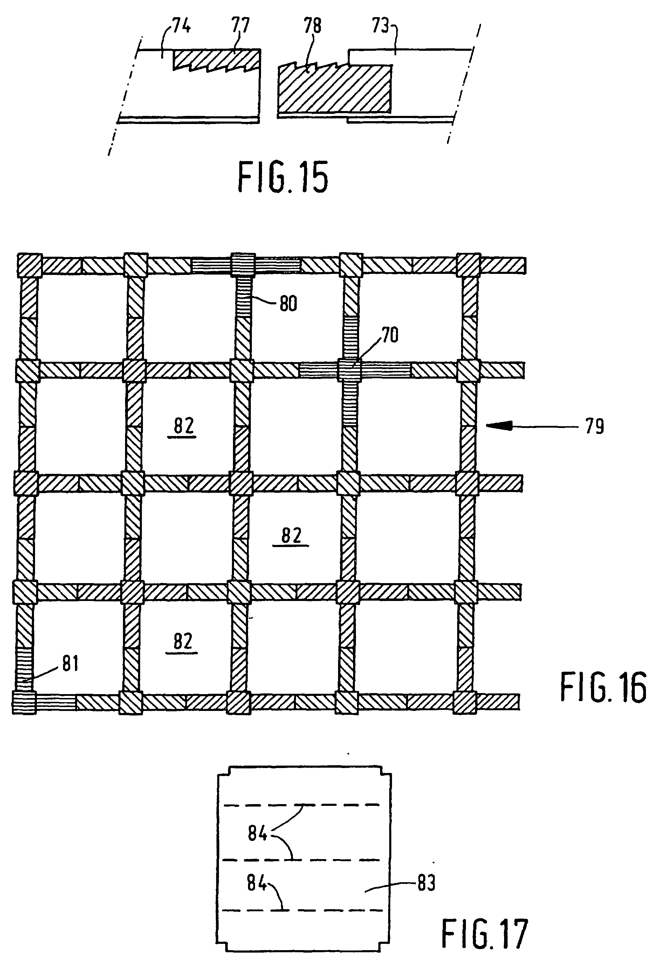

As is shown in more detail in Figure 14, the body 71 and the foot 72 are separate elements that can be linked together, as a result of which a large degree of freedom in placing the supporting modules 70 in a reservoir is obtained, wherein the length of the body 71 may vary in accordance with the depth of the reservoir.

The supporting modules 70, in the various variants thereof as mentioned above, are preferably made of a plastic material or other sheet material of drinking water grade. This means that the material is suitable for drinking water uses. The supporting modules 70, that is the body 71, the foot 72 and the arms 73, 74, are preferably hollow to enable filling thereof with structural concrete 75 or another material providing sufficient strength for strengthening and weighting purposes. Additional strength can be obtained by incorporating one or more reinforcement bars 76 in a cavity in the body, as is shown in sectional view in Figure 12.

Various methods can be used in practice for linking together the body 71 and the foot 72, which methods are known per se to those who are skilled in the art, and consequently these methods need not be explained in more detail for the purpose of the invention.

In the illustrated preferred embodiment of the supporting module 70, the arms 73, 74 can be linked together, that is, an arm 73 of one supporting module can be connected to an arm 74 of the other supporting module, for example in the manner that is shown in more detail in Figure 15.

A first arm 74 of a supporting module 70 is thereby provided with internal serrations 77 in line with the arm.

A second arm 73 of supporting module 70 has outwardly extending serrations 78 in line therewith. Serrations 77 and 78 are adjusted to each other in such a manner that a second arm 73 of a first supporting module can be inserted into a first arm 74 of a second, adjacent supporting module, wherein serrations 77 and 78 slide over each other, whilst serrations 77 and 78 will firmly and fixedly engage each other upon movement of the arms in opposite direction, that is, when a second arm 73 is being moved out of a first arm 74. Besides the illustrated serrated teeth, also other teeth or other connecting techniques for linking the supporting modules 70 together by means of arms 73, 74 are conceivable to those skilled in the art.

The supporting modules can be used to build up a mesh-like or grid-like supporting structure 79, as is schematically shown in Figure 16. Four-armed supporting modules 70, three-armed supporting modules 80 and two-armed supporting modules 81 are schematically indicated in the shaded portions of said Figure. It will be understood that the dimensions of the supporting structure 79 may vary in accordance with the dimensions of the reservoir.

To those skilled in the art it will be apparent that the three-armed and the two-armed supporting modules, and also the one-armed supporting modules, if desired, can also be made from a four-armed supporting module 70, for example by sawing off one or more arms 73, 74.

Covers 83 are provided for covering the openings 82 between arms 73, 74 of the linked-together supporting modules, as is schematically shown in top plan view in Figure 17.

The supporting structure 79 with the covers 82 provides an even support for the floor of a greenhouse, such as floor 24 in Figure 4. Strengthening ribs 84 extending over the surface of covers 83 are provided for further strengthening thereof.

As is shown in Figure 12, the supporting modules 70, 80, 81 can be disposed on a watertight foil 85 on a ground cloth 86 on the bottom of a reservoir, such as the reservoir or trough 40 that is shown in Figure 5.

Although a preferred embodiment of the supporting modules is shown herein as the filling material in a reservoir, it is possible for those skilled in the art to make further improvements and/or modifications of said supporting modules, which will fall within the scope of the invention.

Although the invention has been explained in the above by means of a preferred embodiment, wherein the reservoir 25 extends in its entirety under the floor 24 of the greenhouse, it will be apparent that the reservoir may also extend partially under the floor and more or less under the ground, or under the so-called container area, outside the greenhouse.

## Claims

1. A greenhouse for cultivating plants, flowers, fruits and/or vegetables, comprising a floor and a reservoir for storing a liquid, such as rain water, **characterized in that** said reservoir is disposed at least partially under the floor of said greenhouse.

2. A greenhouse according to claim 1, **characterized in that** said reservoir is disposed partially underground outside said greenhouse.

3. A greenhouse according to any of the preceding claims, **characterized in that** said reservoir is comprised of a material which is capable to a high degree of retaining liquid and which possesses sufficient load bearing capacity to support said floor of said greenhouse and the load that is exerted thereon during use.

4. A greenhouse according to claim 3, **characterized in that** said reservoir is in the form of a liquid-tight trough, which is filled with a filling material that evenly supports said floor of said greenhouse.

5. A greenhouse according to claim 3, **characterized in that** said trough is filled with one or several of the following filling materials: washed seashel l s, Agrex granules, shells of a plastic material, apertured plastic spheres, open-work plastic cassettes, stool-shaped or table-shaped supporting modules, ribbed drainage, pipes of a plastic material, such as PVC, stackable gutters, for example made of concrete, plastic or sheet steel.

6. A greenhouse according to claim 3, **characterized in that** the filling material consists of supporting modules which are comprised of an elongated body having a foot at one end and one or more arms extending substantially transversely to said body at another end.

7. A greenhouse according to claim 6, **characterized in that** said supporting modules comprise four, three, two or one arm(s), respectively.

8. A greenhouse according to claim 6 or 7, **characterized in that** said arms include means for being linked to arms of adjacent supporting modules.

9. A greenhouse according to claim 8, **characterized in that** said linking means are made up of first internal serrations in line with a first arm and outwardly extending serrations in line with a second arm, which first and second serrations are adjusted to each other in such a manner that a first arm can be inserted in to a second, with said serrations sliding over each other, whilst said serrations firmly and fixedly engage each other upon movement of said arms in opposite direction, that is, when a second arm is being moved out of a first arm.

10. A greenhouse according to claim 6, 7, 8 or 9, **characterized in that** said body and said foot of said supporting module include further linking means for linking the same together.

11. A greenhouse according to claim 6, 7, 8, 9 or 10, **characterized in that** said body, said foot and said arms of a supporting module are hollow so as to be filled up with structural concrete or another sufficiently strong and heavy material for strengthening and weighting said supporting module.

12. A greenhouse according to claim 11, **characterized in that** said body of said supporting module includes a cavity for receiving one or more reinforcement bars.

13. A greenhouse according to claim 6, 7, 8, 9, 10, 11 or 12, **characterized by** a grid-like or mesh-like supporting structure comprised of linked-together supporting modules and by covers that close the openings or meshes between said linked-together arms.

14. A greenhouse according to claim 6, 7, 8, 9, 10, 11, 12 or 13, **characterized in that** said supporting module is made of a plastic material or of sheet material of drinking water grade.

15. A greenhouse according to claims 5 - 14, **characterized in that** the trough is excavated and **in that** the walls and the bottom of the trough are lined with a water-impermeable, elastic rubber or plastic foil of sufficient mechanical strength, which foil has a brush-like structure extending towards the inside of the trough.

16. A greenhouse according to claims 5 - 14, **characterized in that** said trough is excavated and the walls and the bottom of said trough are lined with a water-impermeable concrete, such as type B35 concrete, with a synthetic fibre reinforcement.

17. A greenhouse according to claims 3 - 16, **characterized in that** said filling material is covered with a water-permeable cover layer, such as a water-permeable cloth, on which a layer of for example drain sand or crushed gravel or the like material is present.

18. A greenhouse according to claims 3 - 16, **characterized in that** said filling material is covered with a water-impermeable concrete, such as type B35 concrete, with a synthetic fibre reinforcement.

19. A greenhouse according to any of the preceding claims, **characterized in that** said reservoir is compartmentalised.

20. A greenhouse according to claim 19, **characterized in that** a first compartment is arranged for storing water and a second compartment is arranged as an overflow basin.

21. A greenhouse according to claim 19 or 20, **characterized in that** one or more of said compartments is (are) thermally insulated.

22. A greenhouse according to any of the preceding claims, **characterized by** a rain water drainage system connected to said reservoir, comprising at least one rain water drain pipe, which opens into at least one separating filter, which is connected to said reservoir.

23. A greenhouse according to claim 22, **characterized by** rain water drain pipes distributed over the greenhouse and associated separating filters, wherein one or more of said separating filters is connected to an overflow reservoir or basin.

24. A greenhouse according to any of the preceding claims, **characterized in that** said greenhouse terminates in straight or vertical walls on the outside, which are connected, via an inclined roof and a gutter system, to rain water drain pipes that extend into said reservoir.

## Patentansprüche

1. Ein Gewächshaus zum Ziehen von Pflanzen, Blumen, Obst und/oder Gemüse, welches einen Boden und ein Reservoir zum Speichern von Flüssigkeit, wie Regenwasser, umfasst, **dadurch gekennzeichnet, dass** das genannte Reservoir wenigstens teilweise unter dem Boden des genannten Gewächshauses angeordnet ist.

2. Ein Gewächshaus gemäß Anspruch 1, **dadurch gekennzeichnet, dass** das genannte Reservoir teilweise im Untergrund außerhalb des Gewächshauses bereitgestellt ist.

3. Ein Gewächshaus gemäß einem der vorhergehenden Ansprüche, **dadurch gekennzeichnet, dass** das genannte Reservoir aus einem Material besteht, welches in hohem Maße fähig ist, Flüssigkeit zurückzuhalten und das eine ausreichende Lastentragfähigkeit besitzt, um den genannten Boden des genannten Gewächshauses zu unterstützen und die Last, die darauf bei der Benutzung wirkt, zu tragen.

4. Ein Gewächshaus gemäß Anspruch 3, **dadurch gekennzeichnet, dass** das genannte Reservoir die Form eines flüssigkeitsdichten Trogs hat, der mit einem Füllmaterial gefüllt ist, das den genannten Boden des genannten Gewächshauses gleichmäßig unterstützt.

5. Ein Gewächshaus gemäß Anspruch 3, **dadurch gekennzeichnet, dass** der genannte Trog mit einem oder mehreren der folgenden Füllmaterialien gefüllt ist: gewaschenen Muschelschalen, Agrex Körnern, Schalen aus Plastikmaterial, durchlöchertern Plastikkugeln, durchbrochenen Plastikkassetten, stuhl- oder tischförmigen Unterstützungsmodulen, gerippten Abwasserrohren, Röhren aus einem Plastikmaterial, wie beispielsweise PVC, stapelbaren Rinnen, zum Beispiel aus Beton, Plastik oder Walzstahl.

6. Ein Gewächshaus gemäß Anspruch 3, **dadurch gekennzeichnet, dass** das Füllmaterial aus Unterstützungsmadulen besteht, die aus einem langgestreckten Körper mit einem Fuß an dem einen Ende und einem oder mehreren Armen an dem anderen Ende bestehen, die sich im wesentlichen horizontal zu dem genannten Körper erstrecken.

7. Ein Gewächshaus gemäß Anspruch 6, **dadurch gekennzeichnet, dass** die genannten Unterstützungsmodule vier, drei, zwei beziehungsweise einen Arm(e) umfassen.

8. Ein Gewächshaus gemäß Anspruch 6 oder 7, **dadurch gekennzeichnet, dass** die genannten Arme Mittel zum Verbinden mit Armen angrenzender Unterstützungsmodule beinhalten.

9. Ein Gewächshaus gemäb Anspruch 8, **dadurch gekennzeichnet, dass** die genannten Verbindungsmittel aus ersten, inneren Auszackungen in Reihe mit einem ersten Arm und sich nach außen erstreckenden Auszackungen in Reihe mit einem zweiten Am bestehen, deren erste und zweite Auszackungen auf eine derartige Weise zueinander justiert sind, dass ein erster Arm in einen zweiten eingesetzt werden kann, wobei die genannten Auszackungen übereinander gleiten, während die genannten Auszackungen fest und unbeweglich ineinander bei Bewegung der genannten Arme in entgegengesetzter Richtung eingreifen, und zwar dann, wenn ein zweiter Arm aus einem ersten Arm herausbewegt wird.

10. Ein Gewächshaus gemäß Anspruch 6, 7, 8 oder 9, **dadurch gekennzeichnet, dass** der genannte Körper und der genannte Fuß des genannten Unterstützungsmoduls weitere Verbindungsmittel zum Verbinden derselben beinhalten.

11. Ein Gewächshaus gemäß Anspruch 6, 7, 8, 9 oder 10, **dadurch gekennzeichnet, dass** der genannte Körper, der genannte Fuß und die genannten Arme eines Unterstützungsmoduls hohl sind, so dass sie mit Strukturbeton oder einem anderen ausreichend starkem und schwerem Material zum Verstärken und Beschweren des genannten Unterstützungsmoduls gefüllt werden können.

12. Ein Gewächshaus gemäß Anspruch 11, **dadurch gekennzeichnet, dass** der genannte Körper des genannten Unterstützungsmoduls einen Hohlraum zum Aufnehmen einer oder mehrerer Verstärkungsstangen beinhaltet.

13. Ein Gewächshaus gemäß Anspruch 6, 7, 8, 9, 10, 11 oder 12, **gekennzeichnet durch** eine gitter- oder maschenartige Stützstruktur, die aus miteinander verbundenen Unterstützungsmodulen und aus Abdeckungen besteht, die die Öffnungen oder Maschen zwischen den genannten miteinander verbundenen Armen abdeckt.

14. Ein Gewächshaus gemäß Anspruch 6, 7, 8, 9, 10, 11, 12 oder 13, **gekennzeichnet dadurch, dass** das genannte Unterstützungsmodul aus einem Plastikmaterial oder bogenförmigen Material von trinkwasserfähiger Qualität besteht.

15. Ein Gewächshaus gemäß der Ansprüche 5 - 14, **gekennzeichnet dadurch, dass** der Trog ausgebaggert ist und dass die Wände und der Boden mit einer wasserundurchlässigen, elastischen Gummi- oder Plastikfolie mit ausreichender mechanischer Stärke ausgeschlagen sind, wobei die Folie eine bürstenartige Struktur hat, die sich zum Innern des Trogs hin erstreckt.

16. Ein Gewächshaus gemäß der Ansprüche 5 - 14, **dadurch gekennzeichnet, dass** der genannte Trog ausgebaggert ist und die Wände und der Boden des genannten Trogs mit einem wasserundurchlässigem Beton, wie Typ B35 Beton, mit einer synthetischen Faserverstärkung ausgefüllt sind.

17. Ein Gewächshaus gemäß der Ansprüche 3 - 16, **dadurch gekennzeichnet, dass** das genannte Füllmaterial mit einer wasserdurchlässigen Abdeckschicht, wie beispielsweise einem wasserdurchlässigen Tuch, ummantelt ist, auf dem zum Beispiel eine Schicht von Drainagesand oder gemahlener Kies oder dergleichen liegt.

18. Ein Gewächshaus gemäß der Ansprüche 3 - 16, **dadurch gekennzeichnet, dass** das genannte Füllmaterial mit einem wasserundurchlässigem Beton, wie Typ B35 Beton, mit einer synthetischen Faserverstärkung ummantelt ist.

19. Ein Gewächshaus gemäß irgendeinem der vorhergehenden Ansprüche. **dadurch gekennzeichnet, dass** das genannte Reservoir unterteilt ist.

20. Ein Gewächshaus gemäß Anspruch 19, **dadurch gekennzeichnet, dass** eine erste Unterteilung zum Speichern von Wasser und eine zweite Unterteilung als Überlaufbecken angeordnet ist.

21. Ein Gewächshaus gemäß Anspruch 19 oder 20, **dadurch gekennzeichnet, dass** eine oder mehrere der genannten Unterteilungen wärmeisoliert ist (sind).

22. Ein Gewächshaus gemäß irgendeinem der vorhergehenden Ansprüche, **gekennzeichnet durch** ein mit dem genannten Reservoir verbundenen Regenwasser Drainage System, das wenigstens eine Regenwasserablaufröhre umfasst, die in wenigstens einen separierenden Filter mündet, der mit dem genannten Reservoir verbunden ist.

23. Ein Gewächshaus gemäß Anspruch 22, **gekennzeichnet durch** Regenwasser Ablaufrinnen, die über das Gewächshaus verteilt sind und separierende Filter, wobei einer oder mehrere der separierenden Filter mit einem Überlaufreservoir oder -becken verbunden ist.

24. Ein Gewächshaus gemäß irgendeinem der vorhergehenden Ansprüche, **dadurch gekennzeichnet, dass** das genannte Gewächshaus in geraden oder vertikalen Wänden an der Außenseite endet, die - durch ein geneigtes Dach und ein Rinnensystem - mit Regenwasserablaufröhren verbunden sind, die sich in das genannte Reservoir erstrecken.

## Revendications

1. Serre destinée à la culture de plantes, de fleurs, de fruits et/ou de légumes, comprenant un plancher et un réservoir pour stocker un liquide, tel que de l'eau de pluie, **caractérisée en ce que** ledit réservoir est disposé au moins partiellement sous le plancher de ladite serre.

2. Serre selon la revendication 1, **caractérisée en ce que** ledit réservoir est disposé partiellement sous terre en dehors de ladite serre.

3. Serre selon l'une quelconque des revendications précédentes, **caractérisée en ce que** ledit réservoir comprend un matériau qui est capable, à un degré élevé, de retenir du liquide et qui possède une capacité porteuse suffisante pour supporter ledit plancher de ladite serre ainsi que la charge qui y est exercée pendant son utilisation.

4. Serre selon la revendication 3, **caractérisée en ce que** ledit réservoir est sous forme d'un chéneau étanche aux liquides, qui est rempli d'un matériau de remplissage qui supporte également ledit plancher de ladite serre.

5. Serre selon la revendication 3, **caractérisée en ce que** ledit chéneau est rempli d'un ou de plusieurs des matériaux de remplissage suivants : coquillages lavés, granulés Agrex, coquilles en matière plastique, sphères en matière plastique ouvertes, cassettes en matière plastique ajourées, modules de soutien en forme de tabouret ou en forme de table, dispositif de drainage nervuré, tuyaux en matière plastique, tel que le PVC, gouttière empilable, réalisée, par exemple, en béton, en matière plastique ou en tôle d'acier.

6. Serre selon la revendication 3, **caractérisée en ce que** le matériau de remplissage se compose de modules de soutien qui comprennent un corps allongé ayant un pied à une extrémité et un ou plusieurs bras s'étendant sensiblement transversalement audit corps à une autre extrémité.

7. Serre selon la revendication 6, **caractérisée en ce que** lesdits modules de soutien comprennent quatre, trois, deux ou un bras, respectivement.

8. Serre selon la revendication 6 ou 7, **caractérisée en ce que** lesdits bras comprennent des moyens pour être reliés aux bras des modules de soutien adjacents.

9. Serre selon la revendication 8, **caractérisée en ce que** lesdits moyens de liaison sont composés de premières dentelures internes dans l'alignement d'un premier bras et des dentelures s'étendant extérieurement dans l'alignement d'un second bras, lesquelles première et seconde dentelures sont adaptées en fonction l'une de l'autre de façon à ce qu'un premier bras puisse être inséré dans un second, lesdites dentelures coulissant l'une sur l'autre, pendant que lesdites dentelures se mettent en prise fermement et fixement l'une avec l'autre lors d'un déplacement desdits bras dans un sens opposé, c'est-à-dire, lorsqu'un bras est en train d'être déplacé hors d'un premier bras.

10. Serre selon la revendication 6, 7, 8 ou 9, **caractérisée en ce que** ledit corps et ledit pied dudit module de soutien comprennent d'autres moyens de liaison pour relier ceux-ci ensemble.

11. Serre selon la revendication 6, 7, 8, 9 ou 10, **caractérisée en ce que** ledit corps, ledit pied et lesdits bras d'un module de soutien sont creux de manière à être remplis de béton de charpente ou d'un autre matériau 'suffisamment solide et lourd pour renforcer et donner du poids audit module de soutien.

12. Serre selon la revendication 11, **caractérisée en ce que** ledit corps dudit module de soutien comprend une cavité pour recevoir une ou plusieurs barres d'armature.

13. Serre selon la revendication 6, 7, 8, 9, 10, 11 ou 12, **caractérisée par** une structure de soutien de type grille ou maille comprenant des modules de soutien reliés ensemble et par des couvertures qui ferment les ouvertures ou les mailles entre lesdits bras reliés ensemble.

14. Serre selon la revendication 6, 7, 8, 9, 10, 11, 12 ou 13, **caractérisée en ce que** ledit module de soutien est composé d'une matière plastique ou d'un matériau en tôle d'une qualité pour eau potable.

15. Serre selon les revendications 5 à 14, **caractérisée en ce que** le chéneau est creusé et **en ce que** les parois et le fond du chéneau sont tapissés d'une feuille imperméable à l'eau, en caoutchouc élastique ou en matière plastique ayant une résistance mécanique suffisante, laquelle feuille présente une structure du type brosse s'étendant en direction de l'intérieur du chéneau.

16. Serre selon les revendications 5 à 14, **caractérisée en ce que** le chéneau est creusé et les parois et le fond dudit chéneau sont tapissés d'un béton imperméable à l'eau, tel que du béton de type B35, avec une armature en fibres synthétiques.

17. Serre selon la revendication 3 à 16, **caractérisée en ce que** ledit matériau de remplissage est recouvert d'une couche de couverture perméable à l'eau, telle qu'une étoffe perméable à l'eau, sur laquelle une couche, par exemple, de sable de drainage ou de pierres concassées ou un matériau analogue est présente.

18. Serre selon les revendications 3 à 16, **caractérisée en ce que** ledit matériau de remplissage est recouvert d'un béton imperméable à l'eau, tel que du béton de type B35, avec une armature en fibres synthétiques.

19. Serre selon l'une quelconque des revendications précédentes, **caractérisée en ce que** ledit réservoir est sous forme de compartiments.

20. Serre selon la revendication 19, **caractérisée en ce que** le premier compartiment est agencé pour stocker de l'eau et un second compartiment est agencé en tant que bassin de débordement.

21. Serre selon la revendication 19 ou 20, **caractérisée en ce que** un ou plusieurs desdits compartiments est (sont) isolé(s) thermiquement.

22. Serre selon l'une quelconque des revendications précédentes, **caractérisée par** un système de drainage de l'eau de pluie relié audit réservoir, comprenant au moins un tuyau de drainage de l'eau de pluie, qui s'ouvre dans au moins un filtre de séparation, qui est relié audit réservoir.

23. Serre selon la revendication 22, **caractérisée par** des tuyaux de drainage de l'eau de pluie répartis sur la serre et des filtres de séparation associés, dans laquelle un ou plusieurs desdits filtres de séparation est (sont) relié(s) à un réservoir ou un bassin de débordement.

24. Serre selon l'une quelconque des revendications précédentes, **caractérisée en ce que** ladite serre se termine en cloisons droites ou verticales à l'extérieur, qui sont reliées, par l'intermédiaire d'un toit incliné et d'un système de gouttière, à des tuyaux de drainage d'eau qui s'étendent dans ledit réservoir.
